# EUROPEAN PATENT SPECIFICATION

(11) **EP 4 186 767 B1**
(45) Date of publication and mention of the grant of the patent: **22.01.2025**
(21) Application number: 21857419.2
(22) Date of filing: 13.07.2021
(51) Int. Cl.: B60W 30/18

(54) **METHOD AND APPARATUS FOR CONTROLLING TRAVEL OF VEHICLE, AND VEHICLE, DEVICE, PROGRAM AND MEDIUM**
VERFAHREN UND VORRICHTUNG ZUR STEUERUNG DER FAHRT EINES FAHRZEUGS SOWIE FAHRZEUG, VORRICHTUNG, PROGRAMM UND MEDIUM
PROCÉDÉ ET APPAREIL POUR COMMANDER LE DÉPLACEMENT D'UN VÉHICULE, AINSI QUE VÉHICULE, DISPOSITIF, PROGRAMME ET SUPPORT

(30) Priority: 18.08.2020 CN 202010833813
(43) Date of publication of application: 31.05.2023
(73) Proprietor: Great Wall Motor Company Limited, Hebei 071000 (CN)
(72) Inventor: LIU, Han, Baoding, Hebei 071000 (CN); YANG, Xuejing, Baoding, Hebei 071000 (CN); WU, Di, Baoding, Hebei 071000 (CN); ZHOU, Mingwang, Baoding, Hebei 071000 (CN); HAN, Song, Baoding, Hebei 071000 (CN)
(74) Representative: dompatent von Kreisler Selting Werner - Partnerschaft von Patent- und Rechtsanwälten mbB
(86) International application number: PCT/CN2021/106116
(87) International publication number: WO 2022/037324

(56) References cited:
- EP-A2- 0 965 475
- WO-A2-2011/033528
- CN-A- 105 599 586
- CN-A- 108 501 941
- CN-A- 110 254 428
- CN-A- 111 152 777
- CN-A- 111 483 453
- JP-A- H1 198 612
- KR-A- 20180 008 194
- US-A1- 2017 291 594

## Description

### CROSS-REFERENCE TO RELATED APPLICATIONS

The present invention claims priority to Chinese patent application No. 202010833813.4 filed with CNIPA on August 18, 2020 and entitled "method and apparatus for vehicle driving control, vehicle, device, program and medium".

### TECHNICAL FIELD

The present invention relates to the technical field of electronic control, and more particularly relates to a method and an apparatus for vehicle driving control, a vehicle, a device, a program, and a medium.

### BACKGROUND

With the continuous development of electronic control technology, belt-driven starter generator (Belt-Driven Starter Generator, BSG) motor is beginning to be widely used. Normally, when the vehicle is started, the BSG motor may be controlled to start the engine, then, the vehicle is controlled to be started by the engine. However, when the engine is started, a driving torque for controlling starting of the vehicle can only be output after an oil injection process and an ignition process, so that a problem of power hysteresis during the starting process of the vehicle is caused, a speed and a control degree of the starting of the vehicle are reduced accordingly.

US 2017/291594 A1, CN111483453A and CN110254428A describe methods for vehicle driving control according to the state of the art.

### SUMMARY

The present invention aims at solving at least one of the technical problems in the related art to some extent.

For this purpose, a first objective of the present invention is proposing a method for vehicle driving control, in order to solve the technical problem existed in the related art that the speed of starting of the vehicle is slow, and the control degree of the starting of the vehicle is low.

A second objective of the present invention is proposing an apparatus for vehicle driving control.

A third objective of the present invention is proposing a computer program.

A fourth objective of the present invention is proposing a computer-readable storage medium.

In order to achieve the aforementioned objectives, according to the embodiments of the first aspect of the present invention, a method for vehicle driving control, according to claim 1, is provided, the method is applied to a vehicle being provided with a belt-driven starter generator (Belt-Driven Starter Generator, BSG) motor.

In order to achieve the aforementioned objectives, an apparatus for vehicle driving control, according to claim 7, is provided, the apparatus is applied to a vehicle, the vehicle is provided with a BSG motor.

In order to achieve the aforementioned objectives, according to the embodiments of the third aspect of the present invention, a computer program is provided. The computer program includes a computer-readable code, that, when executed by a computing and processing device, causes the computing and processing device to perform the method for vehicle driving control according to the embodiments of the first aspect of the present invention.

In order to achieve the aforementioned objectives, according to the embodiments of the fourth aspect of the present invention, a computer-readable storage medium is provided, the computer-readable storage medium stores the computer program provided according to the embodiments of the fifth aspect of the present disclosure. Preferred embodiments are disclosed in the dependent claims.

### DESCRIPTION OF THE DRAWINGS

The aforementioned and/or additional aspects and the advantages of the present invention will become obvious and more understandable from the description of the embodiments with reference to the accompanying figures.
FIG. 1 is a flowchart of one method for vehicle driving control as illustrated according to one exemplary embodiment;
FIG. 2 is a flowchart of another method for vehicle driving control as illustrated according to one exemplary embodiment;
FIG. 3 is a flowchart of another method for vehicle driving control as illustrated according to one exemplary embodiment;
FIG. 4 is a flowchart of another method for vehicle driving control as shown according to one exemplary embodiment;
FIG. 5 is a flowchart of another method for vehicle driving control as illustrated according to one exemplary embodiment;
FIG. 6 is a flowchart of another method for vehicle driving control as illustrated according to one exemplary embodiment;
FIG. 7 is a flowchart of another method for vehicle driving control as illustrated according to one exemplary embodiment;
FIG. 8 is a flowchart of another method for vehicle driving control as illustrated according to one exemplary embodiment;
FIG. 9 illustrates a block diagram of an apparatus for vehicle driving control as illustrated according to one exemplary embodiment;
FIG. 10 illustrates a block diagram of another apparatus for vehicle driving control as illustrated according to one exemplary embodiment;
FIG. 11 is a block diagram of another apparatus for vehicle driving control as illustrated according to one exemplary embodiment;
FIG. 12 is a block diagram of another apparatus for vehicle driving control as illustrated according to one exemplary embodiment;
FIG. 13 is a block diagram of another apparatus for vehicle driving control as illustrated according to one exemplary embodiment;
FIG. 14 is a block diagram of another apparatus for vehicle driving control as illustrated according to one exemplary embodiment;
FIG. 15 is a block diagram of a vehicle as illustrated according to one exemplary embodiment;
FIG. 16 is a schematic structural diagram of a computing and processing device as illustrated according to one exemplary embodiment;
FIG. 17 is a schematic diagram of a memory unit for portably or fixedly realizing the program code of the method of the present disclosure.

### DETAILED DESCRIPTION OF EMBODIMENTS

Embodiments of the present invention are described in detail herein, and examples of the embodiment are illustrated in the accompanying figures. Where, an always unchanged reference number or similar reference numbers represent(s) identical or similar components or components having identical or similar functionalities. The embodiment described below with reference to the accompanying figures is for illustrative purpose and is intended to illustrate the present application, and thus should not be considered as being limitative to the present application.

A method and an apparatus for vehicle driving control, a vehicle, a device, a program and a medium of the embodiments of the present invention are described with reference to the accompanying figures.

Before introducing the method and the apparatus for vehicle driving control, the vehicle, the device, the program, and the medium provided by the present invention, an application scenario involved in the various embodiments of the present invention are described first. This application scenario may be a vehicle provided with a belt-driven starter generator (Belt-driven Starter Generator, BSG) motor, the vehicle may be an automobile, but is not limited to a traditional automobile or a hybrid automobile. In addition, the method and the apparatus for vehicle driving control provided in the present invention may also be applied to other types of motor vehicles or non-motor vehicles. The embodiments of the present invention are described by taking a method for vehicle driving control performed on a lightweight hybrid vehicle as an example. The present invention is not specifically limited thereto.

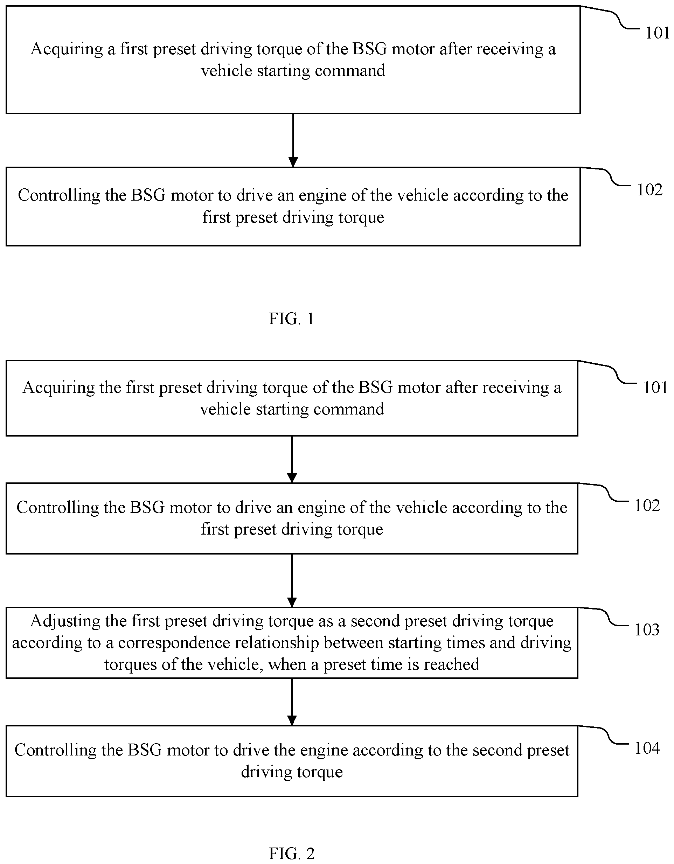

FIG. 1 is a flowchart of a method for vehicle driving control illustrated according to one exemplary embodiment. As shown in FIG. 1, this method is applied to a vehicle, a BSG motor is provided on the vehicle, and the method includes following steps:
At step 101, a first preset driving torque of the BSG motor is obtained after a vehicle starting command is received.

For example, in the process of waiting for the vehicle to be started, a controller of the vehicle may detect whether the vehicle starting command is received in real time. The process of waiting for the vehicle to be started may be a process of waiting for a traffic light, or be a process such as waiting for shunting of vehicles when passing through a congested road segment. The controller may be a Microcontroller unit, an electronic control unit (Electronic Control Unit, ECU) or be a body controller module (Body Control Module, BCM), etc. The controller is not specifically limited in the present invention. The vehicle starting command may be a command sent by a driver of the vehicle through a brake pedal of the vehicle, or be a command sent by the driver through a preset starting switch, the starting switch may be a physical switch on a console of the vehicle, or be a physical switch on a remote control, or be a virtual switch on the console. A user presses or touches the starting switch, then, a starting command is sent to the vehicle. Furthermore, the driver may further send out a specified voice command (e.g., "vehicle starting") or a specified gesture command (e.g., by making a X gesture), and a voice acquisition device (e.g., a microphone, etc.) or an image acquisition device (e.g., a camera, etc.) arranged on the vehicle is configured to acquire the specified voice command or the specified gesture command, and then send a starting command to the vehicle. After receiving the starting command, the first preset driving torque of the BSG motor may be obtained through a hybrid control unit (Hybrid Control Unit, HCU). The first preset driving torque may be pre-stored in a data storage module of the vehicle. The data storage module may include, for example, a read-only memory (Read-Only Memory, ROM), an erasable programmable read-only memory (Erasable Programmable Read-Only Memory, EPROM), and the like.

At step 102, the BSG motor is controlled to drive an engine of the vehicle according to the first preset driving torque, in order to start the vehicle.

For example, after the first preset driving torque is obtained, the BSG motor can be controlled to output the first preset driving torque through the HCU, then, the engine of the vehicle starts to be rotated when the BSG motor outputs the first preset driving torque, that is, the engine is in a state of being dragged by the BSG motor. In other words, the BSG motor can drive the engine according to the first preset driving torque, so that the engine of the vehicle can be rotated according to the first preset driving torque without being started. When the engine starts to be rotated, a rotating speed of the engine (or a clutch) can be obtained through the controller, so that when it is detected that the rotating speed of the engine (or the clutch) reaches a preset rotating speed threshold (e.g., 300 rpm), sliding friction of the clutch of the vehicle is controlled through a transportation control unit (Transmission Control Unit, TCU), so that the vehicle is started. Furthermore, a vehicle data recorder, a front-view camera, a rainfall sensor, an angle sensor arranged on the vehicle can be used for acquiring road condition information (e.g., drying or slippery), and road surface gradient of the vehicle driving currently. Then, the sliding friction of the clutch is controlled according to the road condition information and the road surface gradient, such that the vehicle can be started stably.

As described above, the BSG motor is provided on the vehicle in the present invention, the first preset driving torque of the BSG motor is obtained first by the vehicle after the starting command is received, then, the BSG motor is controlled to drive the engine of the vehicle so as to start the vehicle according to the first preset driving torque. According to the present invention, the engine is driven by the BSG motor, so that the vehicle can be controlled to be started without starting the engine, a problem of power hysteresis of the vehicle caused due to the engine starting process is avoided. The vehicle starting speed is increased, and a control degree of starting of the vehicle is improved.

FIG. 2 is a flowchart of another method for vehicle driving control illustrated according to one exemplary embodiment. As shown in FIG. 2, after the vehicle is started, the method further includes:
At step 103, when a preset time is reached, the first preset driving torque is adjusted as the second preset driving torque according to a correspondence relationship between starting times and driving torques of the vehicle.
At step 104, the BSG motor is controlled to drive the engine according to the second preset driving torque, in order that the vehicle moves with a specified speed.

For example, after the vehicle is started, a friction force between a vehicle wheel and the ground will be reduced, in order to ensure a smooth driving of the vehicle, the first preset driving torque can be adjusted to the second preset driving torque according to the correspondence relationship between the starting times and the driving torques of the vehicle under the condition that the preset time is reached. The preset time may be pre-calibrated when the vehicle leaves the factory, and the preset time may be interpreted as a time period lasting from a time when the BSG motor starts to be rotated to a time when the first preset driving torque is maintained (e.g., 1s). The starting time may be interpreted as a time interval between the starting time of the vehicle and the current time. The correspondence relationship between the starting times and the driving torques may also be pre-stored in the data storage module. In the condition that the preset time is reached, the correspondence relationship between the starting times and the driving torques may be obtained by the controller. The second preset driving torque can be determined according to the correspondence relationship and the starting time. In this way, the first preset driving torque can be adjusted to the second preset driving torque, then, the BSG motor is controlled to drive the engine according to the second preset driving torque, such that the vehicle can move stably according to the specified speed. The specified speed may be interpreted as a constant speed (i.e., a vehicle creep speed) at which the vehicle is moving after the vehicle is started and before the driver sends a speedup command for controlling the vehicle to speed up. The specified speed may be, for example, 8 km/h. The speedup command may be a command sent by the driver through the accelerator pedal of the vehicle. Furthermore, when the second preset driving torque determined according to the starting time and the correspondence relationship is a minimum driving torque, the BSG motor may be controlled to drive the engine continuously according to the second preset driving torque, the second preset driving torque may also be adjusted according to information including the road condition information. Then, the BSG motor is controlled to drive the engine according to the adjusted second preset driving torque. The present invention is not limited thereto. Where the minimum driving torque may be interpreted as a minimum torque capable of maintaining a stable and constant-speed driving (i.e., the vehicle creep) of the vehicle.

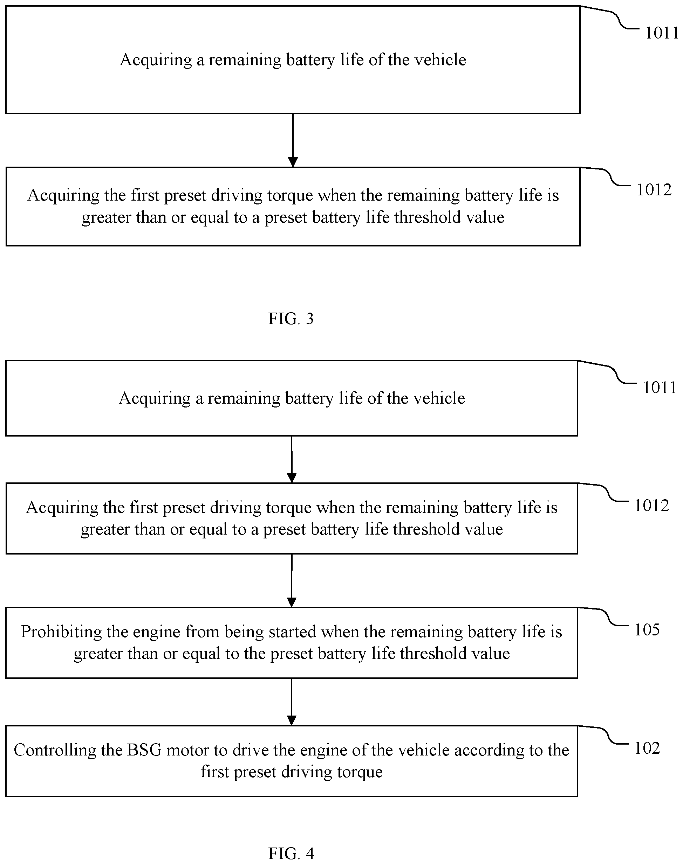

FIG. 3 is a flowchart of another method for vehicle driving control illustrated according to one exemplary embodiment. As shown in FIG. 3, the step 101 includes:
At step 1011, a remaining battery life of the vehicle is obtained.
At step 1012, obtain the first preset driving torque when the remaining battery life is greater than or equal to the preset battery life threshold value.

In one embodiment, after the starting command is received, the remaining battery life of the vehicle may be acquired first. If the remaining battery life is greater than or equal to the preset battery life threshold value, it indicates that the remaining battery life of the vehicle is sufficient, and the BSG motor can be used to drive the engine. Thus, the first preset driving torque may be obtained when the remaining battery life is greater than or equal to the preset battery life threshold value, so that the BSG motor outputs the first preset driving torque. For example, the remaining battery life of the vehicle is expressed in percentage, after the starting command is received, if the obtained remaining battery life is 30% and the preset battery life threshold value is 15%, the remaining battery life is greater than the preset battery life threshold value, that is, the first preset driving torque may be obtained.

FIG. 4 is a flowchart of another method for vehicle driving control illustrated according to one exemplary embodiment. As shown in FIG. 4, the method further includes:
At step 105, starting of the engine is prohibited when the remaining battery life is greater than or equal to the preset battery life threshold value.

For example, when the remaining battery life is greater than or equal to the preset battery life threshold value, the engine can be driven by the BSG motor, such that the problem of power hysteresis caused due to the engine starting process when the vehicle is started can be avoided. In this condition, a start disabling command may be sent to an engine management system (Engine Management System, EMS) through the HCU, so that the starting of the engine can be prohibited. Furthermore, the HCU may send a signal (e.g., a high level signal) for indicating that the engine is operated normally to the EMS while sending the start disabling command, so as to prevent the EMS from sending an error reporting command indicating that the engine is operated abnormally to the driver, when the engine is driven by the BSG motor.

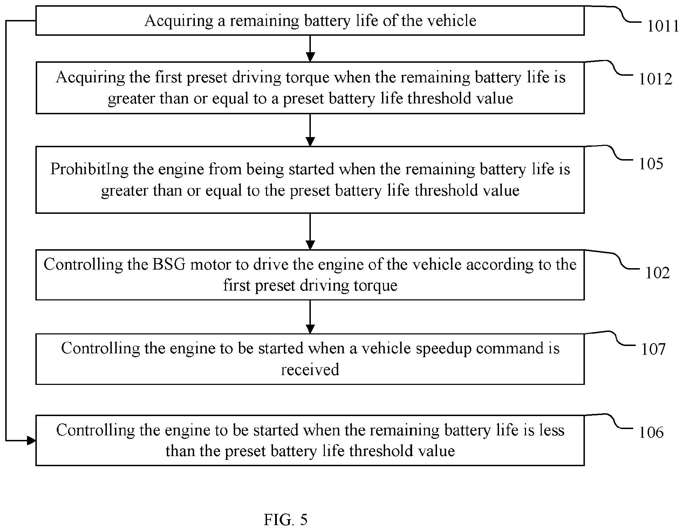

FIG. 5 is a flowchart of another method for vehicle driving control illustrated according to one exemplary embodiment. As shown in FIG. 5, the method further includes:
At step 106, the engine is controlled to be started when the remaining battery life is less than the battery life threshold value. As an alternative,
at step 107, the engine is controlled to be started when a speedup command of the vehicle is received.

For example, after receiving the starting command, if the remaining battery life is less than the preset battery life threshold value, it indicates that the remaining battery life of the vehicle is low, it is difficult to drive the engine through the BSG motor. Thus, the engine can be controlled to be started when the remaining battery life is less than the preset battery life threshold value, and the vehicle is controlled to be started through the engine. In another embodiment, the engine may be controlled to be started when the speedup command of the vehicle is received. For example, the controller may send out a speedup command when it is detected that the driver is pressed on the accelerator pedal. Then, the EMS may control the engine to be started when receiving the speedup command. In this condition, the vehicle may be controlled to speed up through the engine.

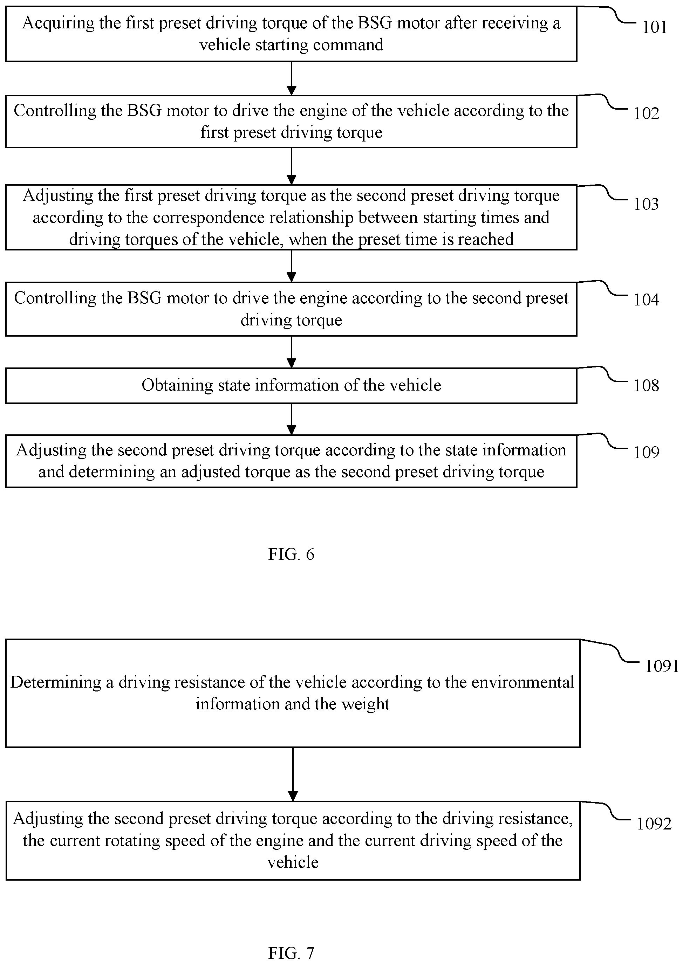

FIG. 6 is a flowchart of another method for vehicle driving control illustrated according to one exemplary embodiment, as shown in FIG. 6, the method further includes:
At step 108, state information of the vehicle is obtained. The state information includes a weight of the vehicle, a current rotational speed of the engine, a current traveling speed of the vehicle, and environmental information.
At step 109, the second preset driving torque is adjusted according to the state information, and an adjusted torque is determined as the second preset driving torque.

For example, after the vehicle is started, as the starting time increases, when the second preset driving torque determined according to the correspondence relationship between starting times and driving torques reaches the minimum driving torque, the state information of the vehicle can be further obtained, then, the second preset driving torque is adjusted according to the state information. The state information may include the weight of the vehicle, the current rotational speed of the engine, the current traveling speed of the vehicle, and the environmental information, etc. For example, the current rotational speed of the engine and the current traveling speed of the vehicle may be obtained through the controller, and the weight of the vehicle is obtained through a pressure sensor arranged on the vehicle. The weight of the vehicle may include the weight of the vehicle itself, and may further include the weight of the driver and the passengers and the luggage on the vehicle. The environmental information may include road condition information (e.g., drying or slippery) of the vehicle driving currently, road gradient, and weather information (e.g., sunny, rain and snow weather), etc. For example, the environment information may be obtained through an automobile data recorder, a front-view camera, a humidity sensor, a rainfall sensor, and an angle sensor provided on the vehicle. After the state information is obtained, the second preset driving torque may be adjusted according to the state information. For example, the state information and the current second preset driving torque may be input into a preset torque adjustment model or a preset torque adjustment model function, then, the torque adjusted by the torque adjustment model or the torque adjustment function may be determined as the second preset driving torque. In another embodiment, after the state information is obtained, a correlation table corresponding to the state information is obtained. Then, the second preset driving torque is adjusted according to the state information and the correlation table, and the adjusted torque is determined as the second preset driving torque, the determination of the second preset driving torque is not specifically limited in the present invention.

FIG. 7 is a flowchart of another method for vehicle driving control illustrated according to one exemplary embodiment. As shown in FIG. 7, the environment information includes at least one of road condition information of the vehicle driving currently, road gradient, and weather information, and the step 109 includes:
At step 1091, a driving resistance of the vehicle is determined according to the environment information and the weight.
At step 1092, the second preset driving torque is adjusted according to the driving resistance, the current rotating speed of the engine and the current driving speed of the vehicle, and the adjusted torque is determined as the second preset driving torque.

For example, when the second preset driving torque is adjusted, the driving resistance of the vehicle may be determined first according to the environment information and the weight of the vehicle. The environment information may include the road condition information of the vehicle driving currently, the road gradient, the weather information, etc. For example, the road condition information may be determined according to the automobile data recorder and the front-view camera of the vehicle. For example, an image of the road where the vehicle is located may be collected through the automobile data recorder, then, the collected image is processed through an image processing model to determine whether a plurality of water hazards exist in the collected image. If the number of water hazards in the collected image exceeds a preset number, it indicates that the road where the vehicle is located is wet and slippery, which means that, the road condition information can be determined as a slippery road. If the number of the water hazards in the collected image does not exceed the preset number, it indicates that the road where the vehicle is located is dry, which means that, the road condition information may be determined as a dry road. The road surface gradient may be determined, for example, by an angle sensor arranged on the vehicle. For example, if the angle sensor detects that an acute angle between a direction orientating from a head of the vehicle to a tail of the vehicle, and the horizontal line is 20°, it indicates that the vehicle is inclined upwards and an inclination angle is 20°. Then, the road surface gradient may be determined as an upslope of 20°. If the detected acute angle between a direction from the tail of the vehicle to the head of the vehicle, and the horizontal line is 20°, it indicates that the vehicle is inclined downwards and the inclination angle is 20°. Then, the road surface gradient may be determined to be downslope of 20°. Weather information may be determined, for example, by the humidity sensor, the rainfall sensor, or the like. For example, if a rainfall detected by the rainfall sensor is greater than or equal to a preset rainfall threshold, it indicates that it is raining in the driving environment of the vehicle. Then, the weather information can be determined as rainfall weather. If the rainfall detected by the rainfall sensor is less than the preset rainfall threshold, it indicates that there is no rainfall in the driving environment of the vehicle, then, the weather information may be determined as sunny weather.

When the driving resistance of the vehicle is determined according to the environment information and the weight of the vehicle, for example, the driving resistance may be determined by querying the environment information and a corresponding correlation table of the weight of the vehicle, respectively. For example, a corresponding relationship between the environment information and the driving resistances are pre-stored in a correlation table A, and a corresponding relationship between weights of vehicles and the driving resistances are pre-stored in a correlation table B. Thus, a driving resistance A corresponding to the environment information may be obtained by querying the correlation table A, and a driving resistance B corresponding to the weight of the vehicle is obtained by querying the correlation table B, and then the sum of the driving resistance A and the driving resistance B is determined as the driving resistance of the vehicle. After the driving resistance is determined, the second preset driving torque may be adjusted by a proportion integration differentiation (Proportion Integration Differentiation, PID) controller according to the driving resistance, the current rotating speed of the engine and the current driving speed of the vehicle. In this way, the second preset driving torque of the vehicle can be adjusted in real-time according to the state information of the vehicle, the adjusted torque is determined as the second preset driving torque, and the engine is driven according to the second preset driving torque, such that the vehicle can move stably at the specified speed, both the control degree and the comfort level of the vehicle are improved.

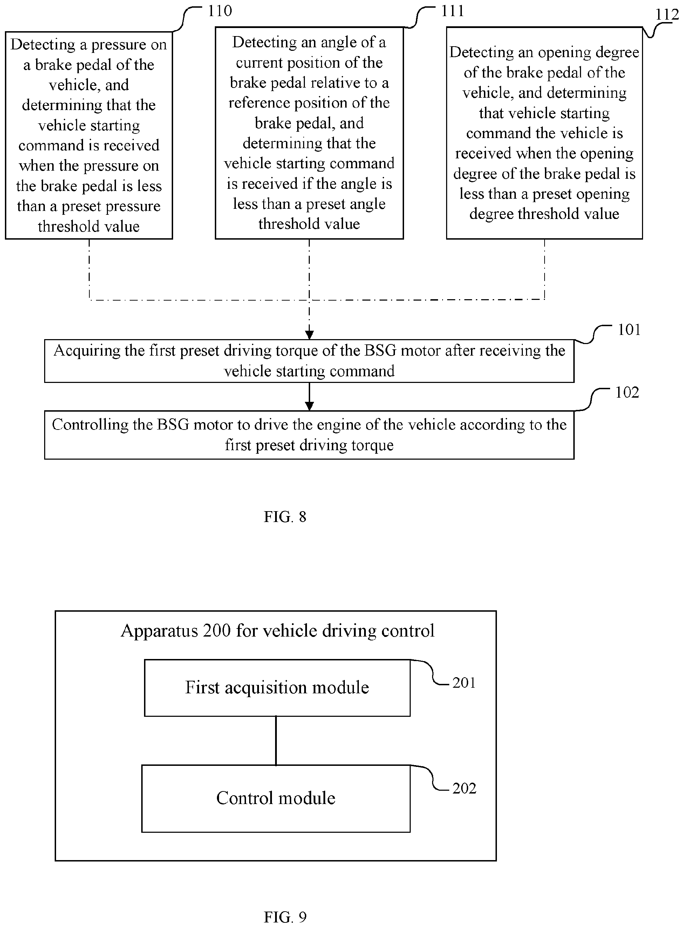

FIG. 8 is a flowchart of another method for vehicle driving control illustrated according to one exemplary embodiment. As shown in FIG. 8, implementation methods for determination of receiving of the starting command of the vehicle may include:
At step 110, a pressure on the brake pedal of the vehicle is detected, and receiving of the starting command is determined when the pressure exerted on the brake pedal is less than a preset pressure threshold value. Or alternatively,
At step 111, an angle of a current position of the brake pedal relative to a reference position of the brake pedal is detected, and receiving of the starting command is determined when the angle is less than a preset angle threshold value. Or alternatively,
At step 112, an opening degree of the brake pedal of the vehicle is detected, and receiving of the starting command is determined when the opening degree of the brake pedal is smaller than the preset opening degree threshold value.

In one implementation, receiving of the vehicle starting command may be determined by detecting the brake pedal of the vehicle. In one embodiment, the pressure on the brake pedal of the vehicle can be detected, if the pressure on the brake pedal is less than the preset pressure threshold value, it indicates that the driver is intended to loosen the brake pedal, and the driver has the intention of controlling the vehicle to be started. The receiving of the starting command is determined when the pressure exerted on the brake pedal is smaller than the preset pressure threshold value. The angle of the current position of the brake pedal relative to the reference position of the brake pedal may also be detected. The reference position may be interpreted as the position of the brake pedal when the brake pedal does not receive an external pressure. If the angle of the current position of the brake pedal relative to the reference position of the brake pedal is smaller than the preset angle threshold value, it indicates that the driver is intended to loosen the brake pedal, and the driver has the intention of controlling the vehicle to be started. Thus, the receiving of starting command can be determined when the angle is smaller than the preset angle threshold value. The opening degree of the brake pedal of the vehicle can also be detected, if the opening degree of the brake pedal is smaller than the preset opening degree threshold value, it indicates that the driver is intended to loosen the brake pedal, and the driver has the intention of controlling the vehicle to be started, the receiving of the starting command is determined when the opening degree of the brake pedal is smaller than the preset opening degree threshold value.

As described above, the BSG motor is arranged on the vehicle in the present invention, the vehicle obtains the first preset driving torque of the BSG motor first after receiving the starting command, and then controls the BSG motor to drive the engine of the vehicle according to the first preset driving torque, in order to start the vehicle. According to the present invention, the engine is driven by the BSG motor, so that the vehicle can be controlled to be started without starting the engine, the problem of power hysteresis of the vehicle caused due to the engine starting process is avoided. The vehicle starting speed is increased, and the control degree of the starting of the vehicle is improved.

FIG. 9 is a block diagram of an apparatus for vehicle driving control illustrated according to one exemplary embodiment. As shown in FIG. 9, the apparatus 200 is applied to a vehicle being provided with a BSG (Belt-Driven Starter Generator) motor. The apparatus 200 includes:
a first acquisition module 201 configured to acquire a first preset driving torque of the BSG motor after receiving a vehicle starting command;
a control module 202 configured to control the BSG motor to drive an engine of the vehicle according to the first preset driving torque, in order to start the vehicle.

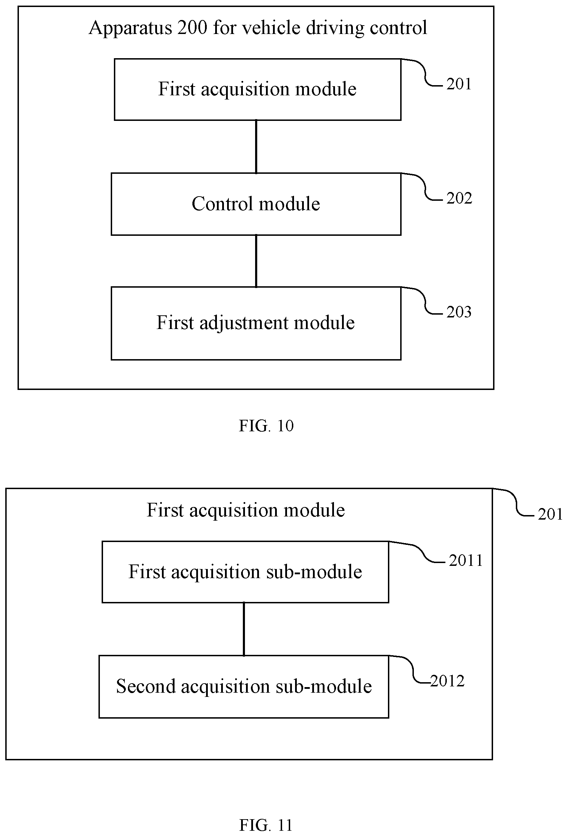

FIG. 10 is a block diagram of another apparatus for vehicle driving control illustrated according to one exemplary embodiment. As shown in FIG. 10, the apparatus 200 further includes:
a first adjustment module 203 configured to adjust the first preset driving torque as a second preset driving torque according to a correspondence relationship between starting times and driving torques of the vehicle after the vehicle is started, when a preset time is reached;
the control module 202 is further configured to control the BSG motor to drive the engine according to the second preset driving torque, in order that the vehicle moves with a specified speed.

FIG. 11 is a block diagram of another apparatus for vehicle driving control illustrated according to one exemplary embodiment. As shown in FIG. 11, the apparatus 200 further includes:
a first acquisition sub-module 2011 configured to acquire a remaining battery life of the vehicle;
a second acquisition sub-module 2012 configured to acquire the first preset driving torque when the remaining battery life is greater than or equal to a preset battery life threshold value.

Optionally, the control module 202 is further configured to:
prohibit the engine from being started when the remaining battery life is greater than or equal to the preset battery life threshold value.

Optionally, the control module 202 is further configured to:
control the engine to be started when the remaining battery life is less than the battery life threshold value; or,
control the engine to be started when a speedup command of the vehicle is received.

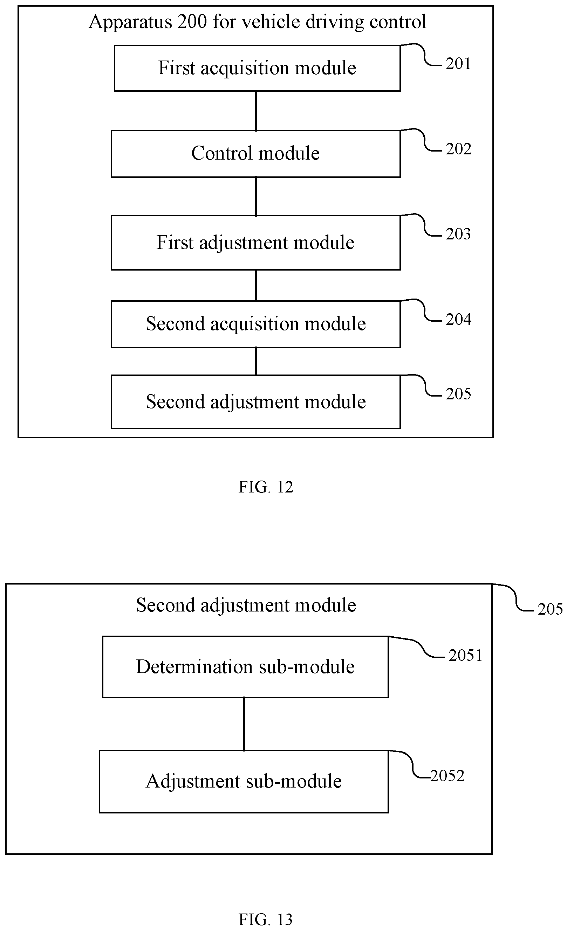

FIG. 12 is a block diagram of another apparatus for vehicle driving control illustrated according to one exemplary embodiment. As shown in FIG. 12, the apparatus 200 further includes:
a second acquisition module 204 configured to acquire state information of the vehicle, the state information includes a weight of the vehicle, a current rotating speed of the engine, a current driving speed of the vehicle and environment information;
a second adjustment module 205 configured to adjust the second preset driving torque according to the state information, and determine an adjusted torque as the second preset driving torque.

FIG. 13 is a block diagram of another apparatus for vehicle driving control illustrated according to one exemplary embodiment. As shown in FIG. 13, the environment information includes at least one of road condition information of the vehicle driving currently, a road surface gradient and weather information, the second adjustment module comprises:
a determination sub-module 2051 configured to determine a driving resistance of the vehicle according to the environment information and the weight;
an adjustment sub-module 2052 configured to adjust the second preset driving torque according to the driving resistance, the current rotating speed of the engine and the current driving speed of the vehicle, and determine the adjusted torque as the second preset driving torque.

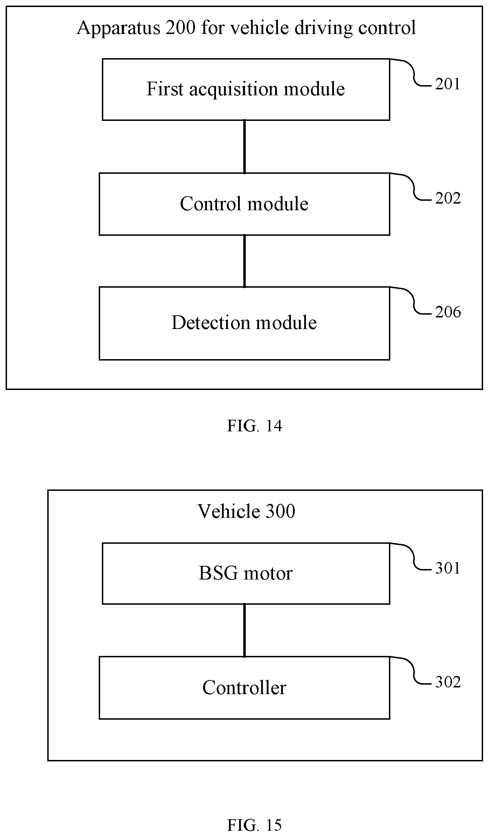

FIG. 14 is a block diagram of another apparatus for vehicle driving control illustrated according to one exemplary embodiment. As shown in FIG. 14, the apparatus 200 further includes a detection module 206 which is used to determine whether the vehicle starting command is received. The detection module 206 is configured to:
detect a pressure on a brake pedal of the vehicle, and determine that the vehicle starting command is received when the pressure exerted on the brake pedal is less than a preset pressure threshold value; or,
detect an angle of a current position of the brake pedal relative to a reference position of the brake pedal, and determine that the vehicle starting command is received, if the angle is less than a preset angle threshold value; or,
detect an opening degree of the brake pedal of the vehicle and determine that the vehicle starting command is received, when the opening degree of the brake pedal is less than a preset opening degree threshold value.

Regarding the apparatus in the embodiments described above, the implementation manners of the various modules of the apparatus have been described in detail in the method embodiments, and thus would not be repeatedly described here.

As described above, the BSG motor is arranged on the vehicle in the present invention, the vehicle obtains the first preset driving torque of the BSG motor first after receiving the starting command, and then controls the BSG motor to drive the engine of the vehicle according to the first preset driving torque, in order to start the vehicle. According to the present invention, the engine is driven by the BSG motor, so that the vehicle can be controlled to be started without starting the engine, the problem of power hysteresis of the vehicle caused due to the engine starting process is avoided. The vehicle starting speed is increased, and the control degree of the starting of the vehicle is improved.

FIG. 15 is a block diagram of a vehicle illustrated according to one exemplary embodiment. As shown in FIG. 15, the vehicle 300 is provided with a BSG motor 301 and a controller 302, the controller 302 is configured to perform steps of the method for vehicle driving control described above.

Regarding the vehicle in the embodiments described above, the implementation manners of the controller have been described in detail in the related method embodiments, and thus would not be repeatedly described and explained here.

As described above, the BSG motor is arranged on the vehicle in the present invention, the vehicle obtains the first preset driving torque of the BSG motor first after receiving the starting command, and then controls the BSG motor to drive the engine of the vehicle according to the first preset driving torque, in order to start the vehicle. According to the present invention, the engine is driven by the BSG motor, so that the vehicle can be controlled to be started without starting the engine, the problem of power hysteresis of the vehicle caused due to the engine starting process is avoided. The vehicle starting speed is increased, and the control degree of the starting of the vehicle is improved.

In order to implement the aforementioned embodiments, a computing and processing device is further proposed in the present invention, the computing and processing device includes:
a memory which stores a computer-readable code;
one or a plurality of processor(s). When the computer-readable code is executed by the one or plurality of processor(s), the computing and processing device is configured to perform the aforementioned method for vehicle driving control.

In order to implement the aforementioned embodiments, a computer program is further proposed in the present invention. The computer program includes a computer-readable code, that, when executed on the computing and processing device, causes the computing and processing device to perform the aforementioned method for vehicle driving control.

In order to implement the aforementioned embodiments, a computer-readable storage medium is further provided in the present invention, where the computer-readable storage medium stores the aforementioned computer program.

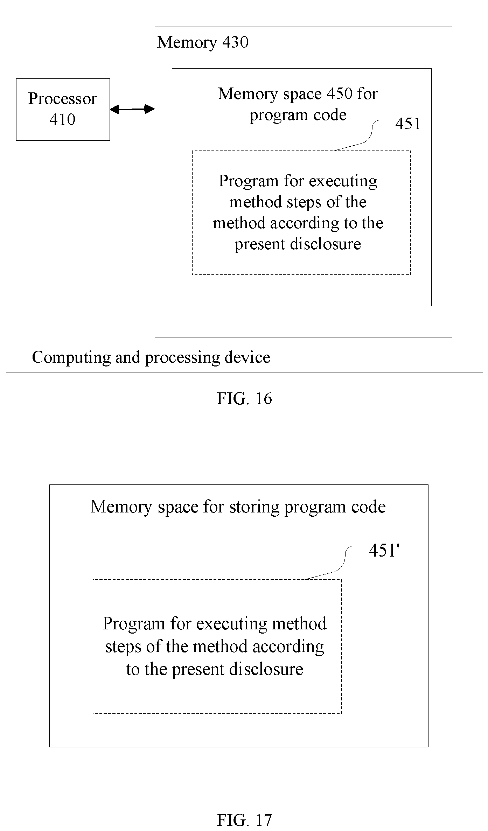

FIG. 16 illustrates a schematic structural diagram of a computing and processing device according to one embodiment of the present invention. The computing and processing device generally includes a processor 410 and a computer program product or computer-readable medium in the form of memory 430. The memory 430 may be an electronic memory such as a flash memory, an electrically erasable programmable read-only memory (Electrically Erasable Programmable Read-Only Memory, EEPROM), an erasable programmable read-only memory (Erasable Programmable Read-Only Memory, EPROM), a hard disk, or a read-only memory (Read-Only Memory, ROM). The memory 430 has a storage space 450 for executing a program code 451 of any method step in the method described above, for example, the storage space 450 for the program code may include various program codes 451 for implementing the various steps in the aforementioned method, respectively. These program codes may be read out from one or more computer program products or be written into the one or more computer program products. These computer program products include a program code carrier such as a hard disk, a compact disc (Compact Disc, CD), a memory card, or a floppy disk. This computer program product is generally a portable or fixed storage unit as shown in FIG. 17. The storage unit may have a storage segment, or a storage space arranged in a manner similar to that of the memory 430 in the server of FIG. 16. The program code may be compressed, for example, in an appropriate form. Generally, the storage unit includes a computer-readable code 451' (i.e., a code that can be read by a processor such as the processor 410), that, when executed by the server, causes the server to perform the various steps in the method as described above.

In the description of the present application, the descriptions of the reference terms such as "one embodiment", "some embodiments", "example", "specific example" or "some examples" and the like means that the specific technical features, structures, materials or characteristics which are described with reference to the embodiments or the examples are included in at least one embodiment or example of the present application. In the description of the present application, a schematic expressions of the terms mentioned above don't necessarily aim at the same embodiment or example. Furthermore, the specific technical features, structures, materials, or characteristics described above may be combined in any suitable manner in any of one or a plurality of embodiments or examples. In addition, under the condition of without conflicting with each other, different embodiments or examples described in the description and the features in the different embodiments or examples may be integrated and combined by the person of ordinary skill in the art.

In addition, terms such as "the first" and "the second" are only used for the purpose of illustration, and thus should not be considered as indicating or implying any relative importance, or implicitly indicating the number of indicated technical features. Thus, technical feature(s) restricted by "the first" or "the second" can explicitly or implicitly comprise one or more such technical feature(s). In the description of the present application, a term "a plurality of" has the meaning of at least two, such as two or three, etc., unless otherwise the term of "a plurality of" is specifically and explicitly defined.

Any process or method described in the flowcharts or in other manner herein may be understood as a module, a segment, or a portion of a code of one or more executable instructions for implementing a customized logic function or steps of a process. Moreover, the scope of the preferable embodiments of the present invention includes additional implementations. Functions may be performed according to an order different from the illustrated or discussed order including the order in the substantially simultaneous manner or in a reverse order according to the involved function, which should be understood by the person of ordinary skill in the art which the embodiments of the present invention pertain to.

The logics and/or the steps represented in the flowcharts or described in other manner herein can be, for example, a fixed sequence table of an executable instruction considered as implementing logical functions. These logics and/or steps may be embodied in any computer-readable medium, and are used by an instruction execution system, an apparatus, or a device (e.g., a computer-based system, a system including a processor, or other systems that may obtain and execute the instruction from the instruction execution system, the apparatus or the device), or be used with the combination of the instruction execution system, the apparatus and the device. Regarding the specification, a "computer-readable medium" may be any device that can contain, store, communicate, propagate, or transport the program so as to be used by the instruction execution system, the apparatus, or the device or be used with the combination of the instruction execution system, the apparatus and the device. A more specific example (a non-exhaustive list) of the computer-readable medium include: an electrical connection part (electronic device) having one or more wires, a portable computer diskette (magnetic device), a random access memory (Random Access Memory, RAM), a read-only memory (Read-Only Memory, ROM), an erasable programmable read-only memory (Erasable Programmable Read-Only Memory, EPROM) or a flash memory, an optical fiber device, and a portable compact disc read-only memory (Portable Compact Disc Read-Only Memory, CDROM). Additionally, the computer-readable medium may even be a paper or other suitable medium on which the program can be printed, because that the program can be obtained electronically by, for example, optically scanning paper or other medium, then editing, interpreting or processing in other appropriate manner when necessary, and then storing the program in a computer memory.

It should be understood that, the various parts of the present invention may be implemented by hardware, software, firmware, or a combination thereof. In the aforementioned embodiments, a plurality of steps or methods may be implemented by software or firmware stored in a memory and executed by a suitable instruction execution system. For example, if the various parts of the present invention are implemented in hardware as implemented in another embodiment, the various parts can be implemented by using any one or a combination of the following techniques of a discrete logic circuit having a logic gate circuit for implementing logic functions of data signals, an application specific integrated circuit having suitable combinational logic gate circuit, programmable gate array (Programmable Gate Array, PGA), field programmable gate array (Field Programmable Gate Array, FPGA), as known in the art.

The person of ordinary skill in the art may understand that all or some of the steps carried in the method of the embodiments may be implemented by using a program to instruct relevant hardware. The program may be stored in a computer-readable storage medium. When this program is executed, one or a combination of the steps of the method embodiment is/are included.

Additionally, the various functional units in each of the embodiments of the present invention may be integrated into one single processing module, or be existed individually and physically. As an alternative, two or more than two units are integrated into one single module. The aforementioned integrated module can either be achieved by hardware, or be achieved in the form of software functional units. When the integrated module is achieved in the form of software functional module and is sold or used as an independent product, the integrated module may be stored in a computer-readable storage medium.

## Claims

1. A method for vehicle (300) driving control, wherein, the method is applied to a vehicle (300) being provided with a belt-driven starter generator (BSG) motor, and the method comprises steps of:
acquiring a first preset driving torque of the BSG motor (301), after receiving a vehicle starting command;
controlling the BSG motor (301) to drive an engine of the vehicle (300) according to the first preset driving torque, in order to start the vehicle (300),
wherein the method further comprises steps of:
adjusting the first preset driving torque as a second preset driving torque according to a correspondence relationship between starting times and driving torques of the vehicle (300), when a preset time is reached;
controlling the BSG motor (301) to drive the engine according to the second preset driving torque in order that the vehicle (300) moves with a specified speed;
acquiring state information of the vehicle (300), the state information comprises a weight of the vehicle (300), a current rotating speed of the engine, a current driving speed of the vehicle (300) and environment information; and
adjusting the second preset driving torque according to the state information, and determining an adjusted torque as the second preset driving torque.

2. The method according to claim 1, **characterized in that**, the step of acquiring the first preset driving torque of the BSG motor (301) comprises:
acquiring a remaining battery life of the vehicle (300);
acquiring the first preset driving torque when the remaining battery life is greater than or equal to a preset battery life threshold value.

3. The method according to claim 2, **characterized in that**, the method further comprises a step of:
prohibiting the engine from being started when the remaining battery life is greater than or equal to the preset battery life threshold value.

4. The method according to claim 3, **characterized in that**, the method further comprises steps of:
controlling the engine to be started when the remaining battery life is less than the battery life threshold value; or,
controlling the engine to be started when a speedup command of the vehicle (300) is received.

5. The method according to claim 1, **characterized in that**, the environment information comprises at least one of road condition information of the vehicle (300) driving currently, a road surface gradient and weather information, the step of adjusting the second preset driving torque according to the state information, and determining the adjusted torque as the second preset driving torque comprises:
determining a driving resistance of the vehicle (300) according to the environment information and the weight; and
adjusting the second preset driving torque according to the driving resistance, the current rotating speed of the engine and the current driving speed of the vehicle (300), and determining the adjusted torque as the second preset driving torque.

6. The method according to any one of claims 1 to 5, **characterized in that**, a determination of receiving of the vehicle starting command is implemented by:
detecting a pressure on a brake pedal of the vehicle (300), and determining that the vehicle starting command is received when the pressure exerted on the brake pedal is less than a preset pressure threshold value; or,
detecting an angle of a current position of the brake pedal relative to a reference position of the brake pedal and determining that the vehicle starting command is received, if the angle is less than a preset angle threshold value; or,
detecting an opening degree of the brake pedal of the vehicle (300), and determining that the vehicle starting command is received, when the opening degree of the brake pedal is less than a preset opening degree threshold value.

7. An apparatus (200) for vehicle (300) driving control, wherein, the apparatus (200) is applied to a vehicle (300) being provided with a belt-driven starter generator (BSG) motor, and the apparatus (200) comprises:
a first acquisition module (201) configured to acquire a first preset driving torque of the BSG motor (301) after receiving a vehicle starting command;
a control module (202) configured to control the BSG motor (301) to drive an engine of the vehicle (300) according to the first preset driving torque, in order to start the vehicle (300),
wherein the apparatus (200) further comprises:
a first adjustment module (203) configured to adjust the first preset driving torque as a second preset driving torque according to a correspondence relationship between starting times and driving torques of the vehicle (300) after the vehicle (300) is started, when a preset time is reached;
the control module (202) is further configured to control the BSG motor (301) to drive the engine according to the second preset driving torque in order that the vehicle (300) moves with a specified speed;
a second acquisition module (204) configured to acquire state information of the vehicle (300), the state information comprises a weight of the vehicle (300), a current rotating speed of the engine, a current driving speed of the vehicle (300) and environment information; and
a second adjustment module (205) configured to adjust the second preset driving torque according to the state information, and determine an adjusted torque as the second preset driving torque.

8. The apparatus (200) according to claim 7, wherein the first acquisition module (201) comprises:
a first acquisition sub-module (2011) configured to acquire a remaining battery life of the vehicle (300);
a second acquisition sub-module (2012) configured to acquire the first preset driving torque when the remaining battery life is greater than or equal to a preset battery life threshold value.

9. A computer program, wherein, the computer program comprises a computer-readable code (451), that, when executed by a computing and processing device, causes the computing and processing device to perform the method for vehicle (300) driving control according to any one of claims 1 to 6.

10. A computer-readable storage medium, wherein, the computer-readable storage medium stores the computer program according to claim 9.

## Patentansprüche

1. Verfahren zur Antriebssteuerung eines Fahrzeugs (300), wobei das Verfahren bei einem Fahrzeug (300) angewandt wird, das mit einem Motor mit riemengetriebenen Startergenerator (BSG) ausgestattet ist, und wobei das Verfahren die folgenden Schritte umfasst:
Erfassen eines ersten vorbestimmten Antriebsmoments des BSG-Motors (301) nach dem Empfang eines Fahrzeugstartbefehls;
Steuern des BSG-Motors (301) zum Antrieb eines Motors des Fahrzeugs (300) entsprechend dem ersten vorbestimmten Antriebsmoment, um das Fahrzeug (300) zu starten,
wobei das Verfahren ferner die folgenden Schritte umfasst:
Einstellen des ersten vorbestimmten Antriebsmoments als ein zweites vorbestimmtes Antriebsmoment entsprechend einer Korrespondenzbeziehung zwischen Startzeiten und Antriebsmomenten des Fahrzeugs (300), wenn eine vorbestimmte Zeit erreicht wird;
Steuern des BSG-Motors (301) zum Antrieb des Motors entsprechend dem zweiten vorbestimmten Antriebsmoment, damit sich das Fahrzeug (300) mit einer bestimmten Geschwindigkeit bewegt;
Erfassen von Zustandsinformationen des Fahrzeugs (300), wobei die Zustandsinformationen ein Gewicht des Fahrzeugs (300), eine aktuelle Drehgeschwindigkeit des Motors, eine aktuelle Fahrgeschwindigkeit des Fahrzeugs (300) und Umgebungsinformationen umfassen; und
Einstellen des zweiten vorbestimmten Antriebsmoments entsprechend den Zustandsinformationen, und Bestimmen eines eingestellten Moments als das zweite vorbestimmte Antriebsmoment.

2. Verfahren nach Anspruch 1, **dadurch gekennzeichnet, dass** der Schritt des Erfassens des ersten vorbestimmten Antriebsmoments des BSG-Motors (301) umfasst:
Erfassen einer verbleibenden Batterielaufzeit des Fahrzeugs (300);
Erfassen des ersten vorbestimmten Antriebsmoments, wenn die verbleibende Batterielaufzeit größer als oder gleich einem vorbestimmten Batterielaufzeit-Schwellenwert ist.

3. Verfahren nach Anspruch 2, **dadurch gekennzeichnet, dass** das Verfahren ferner einen folgenden Schritt umfasst:
Verhindern, dass der Motor gestartet wird, wenn die verbleibende Batterielaufzeit größer als oder gleich dem vorbestimmten Batterielaufzeit-Schwellenwert ist.

4. Verfahren nach Anspruch 3, **dadurch gekennzeichnet, dass** das Verfahren ferner die folgenden Schritte umfasst:
Steuern des Motors, so dass dieser startet, wenn die verbleibende Batterielaufzeit geringer als der Batterielaufzeit-Schwellenwert ist; oder
Steuern des Motors, so dass dieser startet, wenn ein Beschleunigungsbefehl des Fahrzeugs (300) empfangen wird.

5. Verfahren nach Anspruch 1, **dadurch gekennzeichnet, dass** die Umgebungsinformationen mindestens eines aus Fahrbahnzustandsinformationen des aktuell fahrenden Fahrzeugs (300), einen Fahrbahnoberflächengradienten und Wetterinformationen umfassen, wobei der Schritt des Einstellens des zweiten vorbestimmten Antriebsmoments entsprechend den Zustandsinformationen und des Bestimmens des eingestellten Drehmoments als das zweite vorbestimmte Antriebsmoment umfassen:
Bestimmen eines Fahrwiderstands des Fahrzeugs (300) entsprechend den Umgebungsinformationen und dem Gewicht; und
Einstellen des zweiten vorbestimmten Antriebsmoments entsprechend dem Fahrwiderstand, der aktuellen Drehgeschwindigkeit des Motors und der aktuellen Fahrgeschwindigkeit des Fahrzeugs (300), und Bestimmen des eingestellten Moments als das zweite vorbestimmte Antriebsmoment.

6. Verfahren nach einem der Ansprüche 1 bis 5, **dadurch gekennzeichnet, dass** ein Bestimmen des Empfangs des Fahrzeugstartbefehls implementiert wird durch:
Detektieren eines Drucks auf ein Bremspedal des Fahrzeugs (300), und Bestimmen, dass der Fahrzeugstartbefehl empfangen wird, wenn der auf das Bremspedal ausgeübte Druck geringer als ein vorbestimmter Druckschwellenwert ist; oder
Detektieren eines Winkels einer aktuellen Position des Bremspedals relativ zu einer Referenzposition des Bremspedals, und Bestimmen, dass der Fahrzeugstartbefehl empfangen wird, wenn der Winkel kleiner als ein vorbestimmter Winkelschwellenwert ist; oder
Detektieren eines Öffnungsgrads des Bremspedals des Fahrzeugs (300), und Bestimmen, dass der Fahrzeugstartbefehl empfangen wird, wenn der Öffnungsgrad des Bremspedals kleiner als ein vorbestimmter Öffnungsgradschwellenwert ist.

7. Vorrichtung (200) zur Antriebssteuerung eines Fahrzeugs (300), wobei die Vorrichtung (200) bei einem Fahrzeug (300) angewandt wird, das mit einem Motor mit riemengetriebenen Startergenerator (BSG) versehen ist, und wobei die Vorrichtung (200) aufweist:
ein erstes Erfassungsmodul (201), das dazu ausgebildet ist, ein erstes vorbestimmtes Antriebsmoment des BSG-Motors (301) nach Empfang eines Fahrzeugstartbefehls zu erfassen;
ein Steuermodul (202), das dazu ausgebildet ist, den BSG-Motor (301) zum Antriebs eines Motors des Fahrzeugs (300) entsprechend dem ersten vorbestimmten Antriebsmoment zu steuern, um das Fahrzeug (300) zu starten,
wobei die Vorrichtung (200) ferner aufweist:
ein erstes Einstellungsmodul (203), das dazu ausgebildet ist, das erste vorbestimmte Antriebsmoment als ein zweites vorbestimmtes Antriebsmoment entsprechend einer Korrespondenzbeziehung zwischen Startzeiten und Antriebsmomenten des Fahrzeugs (300) nach Start des Fahrzeugs (300) einzustellen, wenn eine vorbestimmte Zeit erreicht wird;
wobei das Steuermodul (202) ferner dazu ausgebildet ist, den BSG-Motor (301) zum Antrieb des Motors entsprechend dem zweiten vorbestimmten Antriebsmoment zu steuern, damit sich das Fahrzeug (300) mit einer bestimmten Geschwindigkeit bewegt;
ein zweites Erfassungsmodul (204), das dazu ausgebildet ist, Zustandsinformationen des Fahrzeugs (300) zu erfassen, wobei die Zustandsinformationen ein Gewicht des Fahrzeugs (300), eine aktuelle Drehgeschwindigkeit des Motors, eine aktuelle Fahrgeschwindigkeit des Fahrzeugs (300) und Umgebungsinformationen umfassen; und
ein zweites Einstellungsmodul (205), das dazu ausgebildet ist, das zweite vorbestimmte Antriebsmoment entsprechend den Zustandsinformationen einzustellen und ein eingestelltes Moment als das zweite vorbestimmte Antriebsmoment zu bestimmen.

8. Vorrichtung (200) nach Anspruch 7, wobei das erste Erfassungsmodul (201) aufweist:
ein erstes Erfassungssubmodul (2011), das dazu ausgebildet ist, eine verbleibende Batterielaufzeit des Fahrzeugs (300) zu erfassen;
ein zweites Erfassungssubmodul (2012), das dazu ausgebildet ist, das erste vorbestimmte Antriebsmoment zu erfassen, wenn die verbleibende Batterielaufzeit größer als oder gleich dem vorbestimmten Batterielaufzeit-Schwellenwert ist.

9. Computerprogramm, wobei das Computerprogramm einen computerlesbaren Code (451) aufweist, der bei Ausführung durch eine Rechen- und Verarbeitungsvorrichtung bewirkt, dass die Rechen- und Verarbeitungsvorrichtung das Verfahren zur Antriebssteuerung eines Fahrzeugs (300) nach einem der Ansprüche 1 bis 6 durchführt.

10. Computerlesbares Speichermedium, wobei das computerlesbare Speichermedium das Computerprogramm nach Anspruch 9 speichert.

## Revendications

1. Procédé destiné à une commande d'entraînement d'un véhicule (300), dans lequel, le procédé est appliqué à un véhicule (300) étant pourvu d'un moteur à générateur de démarrage entraîné par courroie (BSG), et le procédé comprend des étapes consistant à :
acquérir un premier couple d'entraînement prédéfini du moteur BSG (301), après réception d'une instruction de démarrage de véhicule ;
la commande du moteur BSG (301) pour entraîner un moteur du véhicule (300) selon le premier couple d'entraînement prédéfini, afin de démarrer le véhicule (300),
dans lequel le procédé comprend en outre les étapes consistant à :
ajuster le premier couple d'entraînement prédéfini en tant que second couple d'entraînement prédéfini selon une relation de correspondance entre des temps de démarrage et des couples d'entraînement du véhicule (300), lorsqu'un temps prédéfini est atteint ;
commander le moteur BSG (301) pour entraîner le moteur selon le second couple d'entraînement prédéfini afin que le véhicule (300) se déplace avec une vitesse spécifiée ;
acquérir des informations d'état du véhicule (300), les informations d'état comprennent un poids du véhicule (300), une vitesse de rotation actuelle du moteur, une vitesse d'entraînement actuelle du véhicule (300) et des informations d'environnement ; et
ajuster le second couple d'entraînement prédéfini selon les informations d'état, et déterminer un couple ajusté en guise de second couple d'entraînement prédéfini.

2. Procédé selon la revendication 1, **caractérisé en ce que,** l'étape d'acquisition du premier couple d'entraînement prédéfini du moteur BSG (301) comprend :
l'acquisition d'une autonomie restante de batterie du véhicule (300) ;
l'acquisition du premier couple d'entraînement prédéfini lorsque l'autonomie restante de batterie est supérieure ou égale à une valeur seuil d'autonomie de batterie prédéfinie.

3. Procédé selon la revendication 2, **caractérisé en ce que,** le procédé comprend en outre une étape consistant à :
empêcher le moteur d'être démarré lorsque l'autonomie restante de batterie est supérieure ou égale à la valeur seuil d'autonomie de batterie prédéfinie.

4. Procédé selon la revendication 3, **caractérisé en ce que,** le procédé comprend en outre des étapes consistant à :
commander le moteur pour qu'il soit démarré lorsque l'autonomie restante de batterie est inférieure à la valeur seuil d'autonomie de batterie ; ou,
commander le moteur pour qu'il soit démarré lorsqu'une instruction d'accélération du véhicule (300) est reçue.

5. Procédé selon la revendication 1, **caractérisé en ce que,** les informations d'environnement comprennent au moins l'une parmi des informations de condition de route du véhicule (300) actuellement entraîné, une pente de surface routière et des informations météorologiques, l'étape d'ajustement du second couple d'entraînement prédéfini selon les informations d'état et de détermination du couple ajusté en guise de second couple d'entraînement prédéfini comprend :
la détermination d'une résistance d'entraînement du véhicule (300) selon les informations d'environnement et le poids ; et
l'ajustement du second couple d'entraînement prédéfini selon la résistance d'entraînement, la vitesse de rotation actuelle du moteur et la vitesse d'entraînement actuelle du véhicule (300), et la détermination du couple ajusté en guise de second couple d'entraînement prédéfini.

6. Procédé selon l'une quelconque des revendications 1 à 5, **caractérisé en ce que,** une détermination de réception de l'instruction de démarrage de véhicule est implémentée par :
la détection d'une pression sur une pédale de frein du véhicule (300), et la détermination que l'instruction de démarrage de véhicule est reçue lorsque la pression exercée sur la pédale de frein est inférieure à une valeur seuil de pression prédéfinie ; ou,
la détection d'un angle d'une position actuelle de la pédale de frein par rapport à une position de référence de la pédale de frein et la détermination que l'instruction de démarrage de véhicule est reçue, si l'angle est inférieur à une valeur seuil d'angle prédéfinie ; ou,
la détection d'un degré d'ouverture de la pédale de frein du véhicule (300), et la détermination que l'instruction de démarrage de véhicule est reçue, lorsque le degré d'ouverture de la pédale de frein est inférieur à une valeur seuil de degré d'ouverture prédéfinie.

7. Appareil (200) destiné à une commande d'entraînement d'un véhicule (300), dans lequel, l'appareil (200) est appliqué à un véhicule (300) étant pourvu d'un moteur à générateur de démarrage entraîné par courroie (BSG), et l'appareil (200) comprend :
un premier module d'acquisition (201) configuré pour acquérir un premier couple d'entraînement prédéfini du moteur BSG (301) après réception d'une instruction de démarrage de véhicule ;
un module de commande (202) configuré pour commander le moteur BSG (301) pour entraîner un moteur du véhicule (300) selon le premier couple d'entraînement prédéfini, afin de démarrer le véhicule (300),
dans lequel l'appareil (200) comprend en outre :
un premier module d'ajustement (203) configuré pour ajuster le premier couple d'entraînement prédéfini en tant que second couple d'entraînement prédéfini selon une relation de correspondance entre des temps de démarrage et des couples d'entraînement du véhicule (300) après que le véhicule (300) a été démarré, lorsqu'un temps prédéfini est atteint ;
le module de commande (202) est configuré en outre pour commander le moteur BSG (301) pour entraîner le moteur selon le second couple d'entraînement prédéfini afin que le véhicule (300) se déplace avec une vitesse spécifiée ;
un second module d'acquisition (204) configuré pour acquérir des informations d'état du véhicule (300), les informations d'état comprennent un poids du véhicule (300), une vitesse de rotation actuelle du moteur, une vitesse d'entraînement actuelle du véhicule (300) et des informations d'environnement ; et
un second module d'ajustement (205) configuré pour ajuster le second couple d'entraînement prédéfini selon les informations d'état, et déterminer un couple ajusté en guise de second couple d'entraînement prédéfini.

8. Appareil (200) selon la revendication 7, dans lequel le premier module d'acquisition (201) comprend :
un premier sous-module d'acquisition (2011) configuré pour acquérir une autonomie restante de batterie du véhicule (300) ;
un second sous-module d'acquisition (2012) configuré pour acquérir le premier couple d'entraînement prédéfini lorsque l'autonomie restante de batterie est supérieure ou égale à une valeur seuil d'autonomie de batterie prédéfinie.

9. Programme d'ordinateur, dans lequel, le programme d'ordinateur comprend un code lisible par ordinateur (451), qui, lorsqu'il est exécuté par un dispositif informatique de traitement, amène le dispositif informatique de traitement à mettre en œuvre le procédé destiné à une commande d'entraînement d'un véhicule (300) selon l'une quelconque des revendications 1 à 6.

10. Support de stockage lisible par ordinateur, dans lequel, le support de stockage lisible par ordinateur stocke le programme d'ordinateur selon la revendication 9.
